Europäisches Patentamt

(19) European Patent Office

Office européen des brevets

(11) EP 0 764 519 A1

(12) EUROPEAN PATENT APPLICATION

(43) Date of publication:
26.03.1997 Bulletin 1997/13

(51) Int. Cl.$^6$: B32B 27/30, B32B 31/00

(21) Application number: 96114079.5

(22) Date of filing: 03.09.1996

(84) Designated Contracting States:
DE GB NL

(30) Priority: 22.09.1995 JP 269382/95

(71) Applicant: KUREHA KAGAKU KOGYO
KABUSHIKI KAISHA
Chuo-ku Tokyo 103 (JP)

(72) Inventors:
• Ibe, Seiichi
  Tsuchiura-shi, Ibaraki-ken (JP)
• Omori, Takeo
  Niihari-gun, Ibaraki-ken (JP)

(74) Representative: Kraus, Walter, Dr. et al
Patentanwälte Kraus, Weisert & Partner
Thomas-Wimmer-Ring 15
80539 München (DE)

(54) Multi-layer film

(57)     The invention provides a multi-layer film composed of a laminate comprising at least (i) a layer formed of an ethylene-vinyl alcohol copolymer (EVOH) and (ii) a layer formed of an ethylene-vinyl acetate copolymer (EVA) having a vinyl acetate content of 2-7 mass%, wherein the layer formed of the ethylene-vinyl acetate copolymer is crosslinked by radiation exposure and stretched at a draw ratio by area ranging from 5 to 40% at the same time as the radiation exposure.

## Description

### FIELD OF THE INVENTION

The present invention relates to a multi-layer film, and more particularly to a multi-layer film which can be subjected to draw forming, has a high elastic recovery factor and a low stress at elastic recovery at its forming temperature, good transparency and gloss, few fish eyes (unmelted matter), and good oxygen gas barrier properties, and does not generate harmful matter such as chlorine gas upon its incineration. The multi-layer film according to the present invention further has features that it can be economically produced with even thickness, and good dimensional stability and rolled form. The multi-layer films according to the present invention are suitable for use as food packaging films, in particular, skin-packaging films making good use of these excellent properties.

### BACKGROUND OF THE INVENTION

In recent years, packaging giving a good appearance has come to be preferred in a field of food packaging. In particular, skin packaging is widely used in packing, for example, bacon, sausage, ham, meat, cheese, etc. because a transparent packaging film is brought into close contact with a product to be packed along its contour to wrap it, and so it does not wrinkle upon the packaging, and the resulting package looks more attractive.

The basic technique of the skin package is a method in which a product to be packed is placed on a base film or sheet, and covered with a plastic film (hereinafter referred to as "skin film") softened under heat, and air in a space between both films is evacuated to bring the skin film into close contact with the product to be packed along its contour.

Various methods have been proposed as skin packaging processes. Among them, a vacuum packaging process under heat, in which a skin film is subjected to draw forming by means of a vacuum mold equipped with a heater, a product to be packed on a base film is covered with a recess of the skin film defined by the draw forming, and air in a space between both films is then evacuated to bring the skin film into close contact with the product to be packed making good use of the elastic recoverability of the skin film, has the advantages of retaining the original form of the product to be packed and moreover easily automating (for example, Japanese Patent Publication Nos. 49206/1981 and 23607/1982).

The skin packaging process will hereinafter be described more specifically. The process comprises (1) subjecting a skin film to draw forming by means of a vacuum mold equipped with vacuum ports and a heater (namely, an upper chamber equipped with a recessed heating plate having vacuum ports), (2) on the other hand, placing a product to be packed on a base film conforming to a recess defined by the draw forming, (3) putting the fringe of the recess together with the base film without cooling the skin film subjected to the draw forming, thereby covering the product to be packed, (4) evacuating air in the recess, and at the same time, returning a pressure between the vacuum mold and the skin film subjected to the draw forming to ordinary pressure, whereby (5) the skin film is brought into close contact with the product to be packed owing to the elastic recoverability thereof, and (6) at the same time, sealing the skin film at the periphery of the product to be packed.

In this skin packaging process, there are also various modifications. For example, there is a method in which a product to be packed, such as sausage, is filled into a recess defined by draw forming. Besides, examples of the sealing include heat sealing and adhesive sealing.

According to the skin packaging process, the preformed skin film is brought into close contact with the product to be packed in a state that it has been softened under heat. Therefore, it is a packaging method different from the general draw packaging. In the draw packaging, a film is formed in advance by means of a mold into a container in the desired form. After a product to be packed is then filled into the container, the container is vacuum-sealed. This process tends to leave a space between the container and the product to be packed, which the space causes problems of forming the cause of juice separation, wrinking to impair the appearance of the resulting package and forming the cause of putrefaction, and so on. This process is also required to fit the form of the container to the shape of the product to be packed.

On the other hand, in the above skin packaging process, the skin film is subjected to preliminary draw forming by means of the vacuum mold. However, a product to be packed is covered with the thus-formed skin film while the film is being retained in the state softened under heat, and the film comes into close contact with the product to be packed owing to its elastic recoverability. According to the skin packaging process, the skin film can be brought into even and close contact with the product to be packed. Besides, even if the form of a product to be packed is not standardized like, for example, a case where slices of bacon are arranged with their positions shifted little by little, it is possible to pack the product.

Accordingly, the skin film used in the skin packaging process is required to have the following special properties, including to have a sufficient elastic recovery factor at its high forming temperature.

First, the skin film is required to be capable of subjecting to draw forming to a draw depth of about 10-25 mm. In order to automatically pack products of various forms by the skin packaging, it is required to make the draw depth large to a certain extent upon the draw forming by means of the vacuum mold.

Second, the skin film is required to have rubber elastic properties at its forming temperature (generally 110-160°C) and not to develop a great stress at its elongation. In the skin packaging, the skin film is preformed by applying a stress in the mold, and a product to be packed is covered with this film. The stress is then removed, whereby the skin film is brought into close contact with the product to be packed owing to the elastic recoverability of the skin film. Therefore, the skin film is required to have rubber elastic properties in the heated state. Namely, the skin film is required to exhibit great rubber elastic forming reversion against forming elongation by the draw forming in a forming temperature range. The elongated part (in particular, a curved part at a corner) of the skin film subjected to the draw forming becomes a surplus part to wrinkle unless the skin film has the rubber elastic properties. However, the use of a film having a great stress at heat shrinkage, such as the conventional heat-shrinkable stretched film, or a film having a great residual stress, such as an elastic film, has such a disadvantage that a product to be packed is strongly compressed to deform it, a soft product to be packed is crushed, a juice is squeezed out of a product to be packed to form the cause of putrefaction, or a sealed part is separated. In order to closely pack the soft product by the skin packaging without any wrinkle at its surface, accordingly, the skin film is required to have a high elastic recovery factor and a small stress at elastic recovery.

Third, the skin film is required to have heat resistance to such an extent that it does not undergo fusion bonding to the heated vacuum mold (heating plate) upon its draw forming by means of the vacuum mold. Although a multi-layer laminated film is generally used as the skin film, the outermost layer thereof is required to have heat resistance to such an extent that it does not undergo fusion bonding to the heating plate.

Fourth, the skin film is required to have excellent transparency and gloss from the viewpoint of enhancing the commercial value of a product to be packed.

Fifth, the skin film is required to have good oxygen gas barrier properties when a product required to prevent putrefaction or store for a long period of time is packed. Accordingly, many skin films have an oxygen gas barrier layer. The skin film is also required not to contaminate a product to be packed. The skin film is further required to have good heat sealability to a base film when it is heat-sealed.

As skin films satisfying such various properties, there have heretofore been used, for example, an unstretched, co- extruded laminated film composed of non-rigid polyvinyl chloride (PVC)/vinylidene chloride copolymer (PVDC)/polyolefin (Japanese Patent Publication No. 2485/1994), a laminated film composed of ethylene-vinyl acetate copolymer (EVA)/PVDC/EVA (Japanese Patent Publication No. 23607/1982) and a laminated film composed of EVA/PVDC/non- rigid PVC (Japanese Patent Publication No. 49206/1981). Among these laminate plies, the non-rigid PVC has a high elastic recovery factor and is hence particularly preferred as a layer (rubber elastic layer) having rubber elastic properties in the skin film.

However, packaging materials which do not generate chlorine gas upon their incineration have been required in recent years under strong demand for environmental protection. However, it has been difficult under the circumstances to find a rubber elastic layer-forming material substitutable for the non-rigid PVC in the skin film.

For example, a film formed from a polyolefin such as EVA or polyethylene is poor in rubber elastic properties, and a laminated film making use of such a film as a rubber elastic layer has the disadvantages of having a low elastic recovery factor at its forming temperature, wrinkling and generating melt holes due to its insufficient heat resistance when used as a skin film. A nylon film also has a low elastic recovery factor at its forming temperature. On the other hand, the conventional stretched films have a great stress at heat shrinkage, while films high in rubber elasticity are too great in residual stress, so that a soft product to be packed, such as bacon, is crushed or compressed and deformed.

There has been proposed a film for vacuum packaging including a co-extruded layer composed of at least two layers of a binding layer formed of a material selected from olefin homopolymers and copolymers, and ionomer materials, and a supplemental layer formed of an ethylene-vinyl acetate copolymer (EVA) having a vinyl acetate content of 9-26 mass%, preferably 12-26 mass% and subjected to radiation crosslinking (Japanese Patent Application Laid-Open No. 290536/1987). However, this film for vacuum packaging is unsuitable for use as a skin-packaging film. The reason for it is that the film has such disadvantages that its heat resistance is insufficient because the content of vinyl acetate in the EVA layer is high, and it discolors to a great extent after the radiation crosslinking, emits a strong odor and tends to generate fish eyes.

When the heat resistance of the skin film is insufficient, the film causes unevenness of thickness by heating and reduction in pressure in skin packaging, so that it tends to break at an extremely thin portion thereof. When the degree of discoloration of the skin film is high, or the fish eyes are generated, the commercial value of the resulting package is impaired. When the odor of the skin film is strong, the odor is imparted to a product to be packed, so that the commercial value of the package is also impaired.

OBJECTS AND SUMMARY OF THE INVENTION

It is an object of the present invention to provide a multi-layer film which can be subjected to draw forming, has a high elastic recovery factor and a low stress at elastic recovery at its forming temperature, good transparency and gloss, few fish eyes, and good oxygen gas barrier properties, and does not generate harmful matter such as chlorine gas upon its incineration.

Another object of the present invention is to provide a multi-layer film which can be economically produced with even thickness, and good dimensional stability and rolled form.

A further object of the present invention is to provide a multi-layer film which has the various properties described above and is suitable for use as a food packaging film, in particular, skin-packaging film.

The present inventors have previously provided a non-rigid multi-layer film comprising a surface layer formed of an ethylene-vinyl alcohol copolymer, a core layer formed of an ethylene-vinyl acetate copolymer having a specific vinyl acetate content and an inner layer formed of an ethylene polymer, and optionally adhesive layers provided between the above layers, wherein at least the core layer is crosslinked by radiation (Japanese Patent Application Laid-Open No. 256830/1995). This non-rigid multi-layer film has many preferable properties, in particular, as a skin-packaging film.

However, there are fields in which more improved skin-packaging ability is required according to use applications thereof. Therefore, the present inventors have continued research for improvement. As a result, it has been found that when a multi-layer film is produced by stretching a laminate comprising a layer formed of a specific resin at a draw ratio within a certain range at the same time as radiation exposure, in particular, the elastic recovery factor of the multi-layer film can be improved with its stress at elastic recovery, residual stress and the like scarcely varied. According to this process, the multi-layer film can be economically produced with even thickness, and good dimensional stability and rolled form. The present invention has been led to completion on the basis of these findings.

According to the present invention, there is thus provided a multi-layer film composed of a laminate comprising at least a layer formed of an ethylene-vinyl alcohol copolymer and a layer formed of an ethylene-vinyl acetate copolymer having a vinyl acetate content of 2-7 mass%, wherein the layer formed of the ethylene-vinyl acetate copolymer is crosslinked by radiation exposure and stretched at a draw ratio by area ranging from 5 to 40% at the same time as the radiation exposure.

According to the present invention, there is also provided the multi-layer film, wherein the laminate comprises the layer formed of the ethylene-vinyl alcohol copolymer as a surface layer, the layer formed of the ethylene-vinyl acetate copolymer having a vinyl acetate content of 2-7 mass% as a core layer and a layer formed of at least one polyethylene resin selected from the group consisting of ethylene homopolymers and ethylene copolymers (provided that if the ethylene copolymer is an ethylene-vinyl acetate copolymer, the vinyl acetate content therein is at most 5 mass%) as an inner layer, and optionally adhesive layers provided between the individual layers.

DETAILED DESCRIPTION OF THE INVENTION

The multi-layer film according to the present invention is a laminate including at least a layer formed of an ethylene-vinyl alcohol copolymer (EVOH) and a layer formed of an ethylene-vinyl acetate copolymer (EVA) having a vinyl acetate content of 2-7 mass%, and can be produced by crosslinking the layer formed of the ethylene-vinyl acetate copolymer by radiation exposure and stretching it at a draw ratio by area ranging from 5 to 40% at the same time as the radiation exposure. When electron rays are used as the radiation, the exposure dose thereof is preferably 50-180 KGy.

When used in skin packaging, the multi-layer film according to the present invention has features that it can be subjected to deep draw forming, has a more enhanced elastic recovery factor and a low stress at elastic recovery at its forming temperature, good transparency and gloss, few fish eyes (unmelted matter), and good oxygen gas barrier properties, and does not generate harmful matter such as chlorine gas upon its incineration. The multi-layer film according to the present invention can be economically produced with even thickness, and good dimensional stability and rolled form in addition to the above properties.

Ethylene-vinyl alcohol copolymer layer:

The ethylene-vinyl alcohol copolymer (EVOH) useful in the practice of the present invention preferably has an ethylene content of 27-47 mol%, a melting point (as measured by the DSC method in accordance with JIS K 7121) of 160-191°C and a melt flow rate (MFR; as measured at 190°C under a load of 2,160 g in accordance with JIS K 6730) of 0.5-20 g/10 min. If the melting point is lower than 160°C, the resulting multi-layer film incurs possibilities that the heat resistance may become insufficient, and the oxygen gas barrier properties may be deteriorated. On the other hand, if the melting point exceeds 191°C, it is difficult to form the resulting multi-layer film.

Since the EVOH layer has excellent gas barrier properties, it is generally used as an oxygen gas barrier layer and at the same time, also employed as a surface layer. When the EVOH layer is used as the surface layer, it is possible to give the resulting multi-layer film sufficient heat resistance to stand its forming temperature (generally, 110-160°C) when conducting draw forming by means of a vacuum mold in skin packaging. More specifically, when the EVOH layer is used as the surface layer which is brought into contact with the vacuum mold, the multi-layer film does not undergo fusion bonding to the vacuum mold (heating plate). Since the EVOH layer has good gloss, it also has an effect of making the resulting package look more attractive.

Although the EVOH is generally used singly, it may be used in the form of a blend with an ethylene (co)polymer with a view toward enhancing its adhesion properties. The proportion of the ethylene (co)polymer to be blended is within a range in which the gas barrier properties and heat resistance of the EVOH are not greatly impaired, for example, at most 30 mass%, preferably at most 10 mass%.

In the present invention, the mass may be used in replacement of the weight.

Ethylene-vinyl acetate copolymer layer:

In the present invention, an ethylene-vinyl acetate copolymer (EVA) having a vinyl acetate content of 2-7 mass%, preferably 3-6 mass% is used. The layer of this EVA is used in the form of a laminate with the EVOH layer. In general, the EVA layer is preferably used as a core layer (intermediate layer) with an ethylene (co)polymer layer provided as an inner layer with a view toward imparting good heat sealability to the multi-layer film. Namely, the multi-layer film has a laminating structure composed of EVOH layer/EVA layer/ethylene (co)polymer layer. The EVA layer is crosslinked by exposing it to radiation, whereby rubber elasticity is imparted thereto, and its heat resistance is also improved.

If the vinyl acetate content in the EVA is lower than 2 mass%, rubber elasticity cannot be sufficiently imparted even when the EVA layer is crosslinked by radiation exposure. If the vinyl acetate content in the EVA exceeds 7 mass%, the resulting multi-layer film has such disadvantages that its heat resistance is lowered, and moreover it gives off an offensive odor, discolors and/or generates fish eyes due to decomposition by the radiation exposure. In particular, an EVA having a vinyl acetate content of 9-26 mass%, preferably 12-26 mass% as disclosed in Japanese Patent Application Laid-Open No. 290536/1987 is expensive and low in melting point. When an EVA having such a high vinyl acetate content is crosslinked by radiation exposure, its melting point can be enhanced to some extent. However, its heat resistance is insufficient, and it gives off an offensive odor stronger as the vinyl acetate content becomes higher. In particular, the defect that it gives off a strong odor makes the resulting multi-layer film unfit to use as a skin-packaging film in which the film comes into close contact with food.

On the other hand, when the EVA layer having a vinyl acetate content of 2-7 mass% is crosslinked by radiation exposure, a high elastic recovery factor and a low stress at elastic recovery are retained, and the resulting multi-layer film, in which the EVA layer is used as the core layer, can be made fit to use as a skin-packaging film. In addition, the EVA layer having a vinyl acetate content of 2-7 mass% is improved in heat resistance by the radiation crosslinking and has features that odor level is low, the degree of discoloration is low, few fish eyes are generated, and transparency and gloss are good.

The core layer is generally formed by the EVA having a vinyl acetate content of 2-7 mass% alone. However, a blend of several kinds of EVA may be used. Alternatively, the EVA may be blended with a small amount (not more than 30 mass%, preferably not more than 10 mass%) of an ethylene (co)polymer to control the vinyl acetate content.

Polyethylene resin layer:

In the present invention, an inner layer is preferably formed by at least one material selected from the group consisting of ethylene homopolymers and ethylene copolymers (provided that if the ethylene copolymer is an ethylene-vinyl acetate copolymer, the vinyl acetate content therein is at most 5 mass%), namely, by a polyethylene resin (PE resin). In skin packaging, the inner layer is a layer which comes into close contact with a product to be packed, and is used in heat-sealing the resulting multi-layer film to a base film.

Examples of the ethylene (co)polymer used in the inner layer include low-density polyethylene (LDPE), medium-density polyethylene (MDPE), high-density polyethylene (HDPE), linear low-density polyethylene (LLDPE), very low-density polyethylene (VLDPE), EVAs having a vinyl acetate content of at most 5 mass%, ethylene-acrylic acid copolymers (EAAs), ethylene-methacrylic acid copolymers (EMAAs), ethylene-methyl acrylate copolymers (EMAs), ethylene-ethyl acrylate copolymers (EEAs) and ionomers (IOs). These polymers may be used either singly or in the form of a blend of two of more polymers thereof.

When an EVA is used as the inner layer, it is necessary to control the content of vinyl acetate in the EVA to at most 5 mass%. Since the step of radiation exposure is conducted after the formation of the multi-layer film, the ethylene (co)polymer of the inner layer is also crosslinked to some extent. The ethylene (co)polymer is easier to be crosslinked as the vinyl acetate content therein becomes higher. Since the inner layer is a layer for heat-seating the multi-layer film, it is preferable that the degree of crosslinking be lower. Accordingly, the vinyl acetate content in the EVA of the inner layer is controlled to at most 5 mass%. The vinyl acetate content in the EVA of the inner layer is desirably not higher than that in the EVA of the core layer.

Adhesive layer:

In order to impart or enhance interlayer adhesion, an adhesive layer may be provided between the EVOH layer and the EVA layer, or between the EVA layer and the PE resin layer as needed. In particular, adhesion between the EVOH layer and the EVA layer is weak even when they are co-extruded, and so an adhesive layer is usually provided between both layers.

An adhesive used in the adhesive layer may be suitably selected. Preferable specific examples thereof include EVA, ethylene-maleic anhydride copolymers, EAA, EEA, ethylene-methyl methacrylate-glycidyl acrylate terpolymers and those obtained by grafting a monobasic unsaturated fatty acid such as acrylic acid or methacrylic acid, a dibasic unsaturated fatty acid such as maleic acid, fumaric acid or itaconic acid, or an anhydride thereof on various polyolefins, for example, maleic acid-grafted EVA, maleic acid-grafted ethylene-$\alpha$-olefin copolymers.

Multi-layer film:

The multi-layer film according to the present invention can be formed by a co-extrusion method, dry lamination method or the like. It is generally produced by extruding the individual materials into a molten annular body by means of plural extruders by the co-extrusion method, forming a laminated film by an inflation method in which air is blown into this annular body, and then exposing the laminated film to radiation such as electron rays and stretching it at a draw ratio by area ranging from 5 to 40% at the same time as the radiation exposure.

More specifically, the individual materials are extruded into the molten annular body having a laminating structure composed of, for example, EVOH layer/adhesive layer/EVA layer/adhesive layer/PE resin layer by a co-extrusion method making use of plural extruders, and air is blown into this annular body to inflate it, thereby forming a thin tubular laminated film. The tubular film thus formed has the EVOH layer as the outermost layer and is then flattened by pinch rolls, followed by exposure to radiation such as electron rays. At the same time as the radiation exposure, the flattened tubular film is stretched at a draw ratio by area ranging from 5 to 40%. Alternatively, both edges of the tubular film flattened by the pinch rolls are slit into flat films, and the flat films are then exposed to radiation and at the same time, stretched at a draw ratio by area ranging from 5 to 40%. When the flat film is exposed to radiation, the exposure is preferably conducted from the side of the EVOH layer. However, the exposure may be conducted from the side of the PE resin layer of the inner layer.

As the radiation, ionizing radiation such as electron rays, $\alpha$-ray, $\beta$-rays or $\gamma$-rays is generally used. Of these, the electron rays are particularly preferred because of easy operation and good exposure efficiency. The electron rays are irradiated under the following conditions:

exposure dose: 5-18 Mrad (50-180 KGy), preferably
10-15 Mrad (100-150 KGy); and
accelerating voltage: 150-300 KV, preferably
200-300 KV.

The draw ratio by area of the EVA layer in the stretching performed at the same time as the radiation exposure is generally within a range of 5-40% (1.05-1.40 times), preferably 10-40% (1.10-1.40 times). If the draw ratio by area is lower than 5%, the effect of enhancing the elastic recovery factor becomes small. If the draw ratio by area exceeds 40% on the other hand, the residual stress of the resulting multi-layer film increases, so that the skin-packaging ability of the multi-layer film becomes poor because a product to be packed is strongly compressed and deformed, or a soft product to be packed is crushed.

The EVOH is difficult to be crosslinked even when exposed to radiation. Although the ethylene (co)polymer of the inner layer is crosslinked by the radiation exposure, excessive crosslinking impairs the heat sealability. In the present invention, it is important to crosslink the EVA of the core layer to impart rubber elasticity thereto. Accordingly, when the exposure is conducted from the side of the EVOH layer of the laminated film when crosslinked by the radiation, the EVA of the core layer is moderately crosslinked, while the inner layer is not excessively crosslinked. It is hence preferable to conduct the exposure in such a manner. However, the exposure may be conducted from the side of the inner layer if the inner layer can be suitably crosslinked without any excessive crosslinking when exposed from the inner layer side. For example, when EVA is used in both core layer and inner layer, and the vinyl acetate content in the EVA of the core layer is higher than that in EVA of the inner layer, the core layer can be effectively crosslinked without excessively crosslinking the inner layer even when the radiation exposure is conducted from the inner layer side. When the radiation exposure is conducted from the inner layer side, it is preferable to select a material for the inner layer from those (for example, EVA having a lower vinyl acetate content and VLDPE) harder to be crosslinked by the radiation than the core layer.

The multi-layer film according to the present invention is only stretched at an extremely low draw ratio (5-40%). When it is stretched at a high draw ratio into a stretched film like the usual heat-shrinkable films, its heat shrinkage force becomes too strong. Such a film is hence unsuitable for use in skin packaging of soft food.

When EVAs having the same vinyl acetate content are used in the core layer and the inner layer in the multi-layer film according to the present invention, the core layer and inner layer come to substantially form one layer. Even in such a case, however, it is preferable to take a structure of at least three layers of surface, core and inner layers because thin layers can be evenly formed while controlling the viscosities of the individual resins in the film-forming step by co-extrusion. When a thick layer is extruded through a general-purpose extruder to form a film, a velocity gradient occurs in a thicknesswise direction of the layer, and the extrudate tends to cause melt fracture.

The total thickness of the multi-layer film according to the present invention is generally 35-300 μm, preferably 50-150 μm. If the thickness of the multi-layer film is too great when used in skin packaging, it takes a long time for heating and forming it, and the forming ability of the skin is impeded. If the thickness is too small on the other hand, the strength of the film becomes insufficient from the viewpoint of the practical use.

With respect to the thicknesses of the individual layers, in general, the EVOH layer is about 5-90 μm, the EVA layer of the core layer is about 10-70 μm, and the PE resin layer of the inner layer is about 20-140 μm. Since the EVOH layer functions as a gas barrier layer, it preferably has a thickness ratio of about 15-30% based on the total thickness.

The multi-layer film according to the present invention has excellent properties that (1) it can be subjected to draw forming to a draw depth of about 10-25 mm, (2) it combines rubber elastic properties with moderate heat shrinkability at its forming temperature (generally 110-160°C) in skin packaging and does not develop a great stress at its elongation, (3) it does not undergo fusion bonding to a heated vacuum mold (heating plate), (4) it can closely pack a soft product by the skin packaging without any wrinkle at its surface, and (5) it has excellent transparency and gloss, scarcely gives off an offensive odor and discolors, and generates few fish eyes. Besides, (6) the multi-layer film according to the present invention has an even thickness, and good dimensional stability and rolled form.

The multi-layer film has an elastic recovery factor at 40% elongation of at least 70% as measured in accordance with a measuring method which will be described subsequently, and a stress at such elongation of at most 1.0 MPa. The fact that the stress at the 40% elongation is small means that a stress at elastic recovery is small. Accordingly, the multi-layer film according to the present invention has a high elastic recovery factor and a small stress at elastic recovery, and so it has rubber elastic properties required of the skin film. The core layer is crosslinked by radiation and generally has a gel fraction of at least 30% as measured in accordance with a measuring method which will be described subsequently. The surface layer combines a gas barrier layer with a heat-resistant layer.

(Measuring method of gel fraction)

An EVOH layer was removed from a multi-layer film, and 70-80 mg of the remaining layers of the multi-layer film were used as a sample. After the sample was placed in 10 ml of trichlorobenzene as a solvent and immersed at 135°C for 2 hours, the dry weight of undissolved matter was measured. The weight of the undissolved matter is expressed in terms of percentage to the sample.

Since the multi-layer film according to the present invention uses, as a core layer, an EVA layer having a vinyl acetate content of 2-7 mass% and crosslinked by radiation exposure, rubber elasticity is imparted to the multi-layer film, and moreover a temperature at 30% elongation as measured by means of a TMA (Thermal Mechanical Analyzer) is shifted on a higher temperature side compared with a case where an EVA having a vinyl acetate content exceeding 7 mass% is used in the core layer, which reveals that the heat resistance of the multi-layer film is improved. When the heat resistance ranked by this temperature at 30% elongation is improved, such problems that the film is broken at an extremely thin portion thereof caused by unevenness of thickness due to heating and reduction in pressure at forming in skin packaging can be overcome. The core layer formed of the EVA having a vinyl acetate content of 2-7 mass% and crosslinked by radiation exposure is low in odor level as measured in accordance with a measuring method which will be described subsequently, and its level is generally at most 200. On the other hand, when an EVA layer having a vinyl acetate content of at least 8 mass% is crosslinked by radiation exposure, the odor level is increased to about 400 or higher. Incidentally, a polymer greater in this numerical value means a polymer higher in odor level.

(Measuring method of odor)

A film sample 10 cm long by 10 cm wide was cut into pieces 1 cm long by 1 cm wide, and 100 sheets of the resulting cut pieces were hermetically sealed in a 100-ml Erlenmeyer flask. After the flack was placed for 2 hours in a Geer oven of 60°C, the intensity (level) of odor in the flask was measured by means of an odor sensor XP-329 manufactured by NEW COSMOS ELECTRIC CO., LTD.

The multi-layer film according to the present invention is suitable for use as a skin film for skin packaging. In particular, it may preferably be applied to the vacuum packaging process under heat, in which a skin film is subjected to draw forming by means of a vacuum mold equipped with a heater, a product to be packed on a base film is covered with a recess of the skin film defined by the draw forming, and air in a space between both films is then evacuated to bring the skin film into close contact with the product to be packed making good use of the elastic recoverability of the skin film. As the base film used in the skin packaging, various single-layer or multi-layer plastic films may be used. Examples of the product to be packed include bacon, sausage, ham, meat, cheese, etc.

ADVANTAGES OF THE INVENTION

According to the present invention, there is provided a multi-layer film which can be subjected to draw forming, has a high elastic recovery factor and a low stress at elastic recovery at its forming temperature, good transparency and gloss, few fish eyes, and good oxygen gas barrier properties, and does not generate harmful matter such as chlorine gas upon its incineration. According to the present invention, there is further provided a multi-layer film having even thickness, and good dimensional stability and rolled form. The multi-layer films according to the present invention are suitably used as, in particular, skin-packaging films making good use of these excellent properties.

## EMBODIMENTS OF THE INVENTION

The present invention will hereinafter be described more specifically by the following examples and comparative examples. However, the present invention is not limited to these examples only. The following methods are followed for the measurement of physical properties.

(1) Color difference ($\Delta E$):

Sheets 5 cm long by 5 cm wide were cut out of each of the resultant multi-layer films, and 10 sheets thereof were placed one over another to prepare a sample. Measurement was conducted by means of an NDH-$\Sigma$80 manufactured by Nippon Denshoku Kogyo K.K. in accordance with JIS K 7105. A standard white plate in which L is 90.0, a is 0.67 and b is 3.37 was used as a standard to determine differences $\Delta L$, $\Delta a$ and $\Delta b$ from the standard, thereby regarding $\Delta E$ calculated in accordance with the following equation as a color difference.

$$\Delta E = \sqrt{(\Delta L)^2 + (\Delta a)^2 + (\Delta b)^2}$$

(2) Heat shrinkage factor:

Sample sheets (Sample A) 100 mm long by 100 mm wide were cut out of each of the resultant multi-layer films. Samples A were separately left to stand for 3 minutes in Geer ovens preset to respective test temperatures (80°C, 100°C, 120°C, 150°C and 170°C). Thereafter, the samples were taken out of the ovens (Samples B), thereby determining a heat shrinkage factor at each test temperature in accordance with the following equation.

$$\text{Heat shrinkage factor (\%)} = \frac{\text{(Area of Sample A - Area of Sample B)}}{\text{Area of Sample A}} \times 100$$

In the case of samples low in heat resistance, some of them are melted under high-temperature conditions. Therefore, with respect to the individual multi-layer films obtained in Examples 1-3 and Comparative Examples 1-10, the heat shrinkage factors measured at the test temperature of 120°C are shown in Table 1.

(3) Transparency (Haze):

A haze of each multi-layer film sample was measured by means of an NDH-$\Sigma$80 manufactured by Nippon Denshoku Kogyo K.K. in accordance with JIS K 7105.

(4) Elastic recovery factor and stress at elongation:

A test piece 50 mm in test length by 10 mm in test width cut out of each multi-layer film was stretched by 40% at a rate of 500 mm/min under conditions of 120°C using a 1122 type tester manufactured by Instron Co. A stress at that time was regarded as a stress at elongation, and a recovery factor after relaxed for 2 seconds was regarded as an elastic recovery factor.

(5) Heat resistance:

A TMA 40 manufactured by Mettler Instrument AG was used as a thermal mechanical analyzer. A load of 0.005 N was applied to a test piece 10 mm in test length by 6 mm in test width by 90 $\mu$m in test thickness cut out of each multi-layer film, and heated at a rate of 10°C/min in a temperature range of 30-250°C, thereby regarding a temperature, at which the sample was stretched by 30%, as a temperature indicative of heat resistance. In Table 1, are shown values indicative of the heat resistance (temperatures indicative of heat resistance) of the multi-layer films separately obtained in Examples 1-3 and Comparative Examples 1-10.

(6) Unmelted matter:

The number of unmelted matters having at least a 0.3x0.3-mm size, which existed in a film sample 10 cm long by 10 cm wide, was visually counted and ranked in 3 grades in accordance with the following standard:

A:   No unmelted matter existed;
B:   Unmelted matters smaller than 10 existed;
C:   Unmelted matters not smaller than 10 existed.

(7) Melt flow rate (MFR):

Measured at 190°C under a load of 2,160 g in accordance with JIS K 6730.

(8) Melting point (Tm):

Measured by means of a differential scanning calorimeter (DSC) in accordance with JIS K 7121.

(9) Unevenness of thickness (U value):

A U value represented by the following equation was determined at 10 positions of a 500-meter rolled film. The ten U values thus obtained were averaged, and an average value was used as an index to the unevenness of thickness.

$$U = 1 - \left(1/2 \sum_{i=1}^{10} \{(X_i - X_a) X_a\}^2\right)^{1/2}$$

wherein $X_i$ means the individual thicknesses ($\mu$m) of the film measured at 10 measuring points in the width direction of the film, and $X_a$ denotes an average value of the thicknesses ($\mu$m) of the film measured at the 10 measuring points.

(10) Dimensional stability (Rw value):

The width (mm) of a 500-meter rolled film was measured at 10 positions. The maximum width ($W_{max}$; mm) and the minimum width ($W_{min}$; mm) of these were used to determine +Rw and -Rw represented by the following equations, respectively, thereby using them as an index to the dimensional stability.

$$+Rw = W_{max} - W$$

$$-Rw = W_{min} - W$$

wherein W means an average value of the widths of the film measured at the 10 measuring points.

(11) Rolled form (R value):

A diameter of a roll of a 500-meter rolled film was measured at 5 positions in the width direction of the film. The maximum diameter ($D_{max}$; mm) and the minimum diameter ($D_{min}$; mm) of these were used to determine an R value represented by the following equation, thereby using this value as an index to the rolled form.

$$R = D_{max} - D_{min}.$$

(12) Suitability test for skin packaging:

Each of the multi-layer films obtained in Examples 1-3 and Comparative Examples 1-10, and a commercially-available base film of a covering material (thickness: 150 $\mu$m) were used to conduct deep draw forming by means of a forming mold (depth: 18 mm; length: 120 mm; width: 245 mm; bottom corner: 7.5 R) of a skin packaging test chamber manufactured by Omori Machine Industries Co., Ltd., thereby packing 6 slices of bacon by skin packaging.

⟨Evaluation of suitability for skin packaging⟩

The appearance of a package after the skin packaging was evaluated as to three items of surface wrinkle, melt hole and warpage of base.

1. Surface wrinkle:

A:  The same level as the conventional film (non-rigid PVC/PVDC/polyolefin). No wrinkle was observed on the whole surface;

B:  Short and shallow wrinkles occurred at corners of a filling part;

C:  Long and deep wrinkles occurred at the whole surface.

2. Melt hole:

A:  No melt hole was observed on the whole surface;

B:  Some thin-film parts just short of generating melt holes occurred at a drawn part;

C:  Melt holes occurred at a drawn part, and release of vacuum thus occurred.

3. Warpage of base:

A:  When a package was placed on a horizontal plane, the whole surface of the base came into close contact with the horizontal plane. No base warpage caused by a stress at the shrinkage of the cover material on the drawing side was observed. The same level as the conventional film (non-rigid PVC/PVDC/polyolefin);

B:  Some warpage caused by a stress at the shrinkage of the cover material was observed on a level that corner parts of the base rose from the horizontal plane;

C:  Edge faces of the base were greatly bent on the cover material side due to a high level of stress at the shrinkage of the cover material.

[Example 1]

The following four materials were used to produce a 5-layer laminated film.

(1) EVOH: "EVAL EP-E105A", trade name, product of Kurary Co., Ltd.; density: 1.14 g/cm$^3$, MFR: 5.5 g/10 min, ethylene content: 44 mol%, melting point: 165°C.

(2) Adhesive: "ADMER VF-500" (EVA type), trade name, product of Mitsui Petrochemical Industries, Ltd.; density: 0.93 g/cm$^3$, MFR: 2.0 g/10 min.

(3) EVA (1) (vinyl acetate content: 5 mass%): "EVATATE D-2011", trade name, product of Sumitomo Chemical Co., Ltd.; density: 0.92 g/cm$^3$, MFR: 2.0 g/10 min, melting point: 103°C.

(4) EVA (2) (vinyl acetate content: 6 mass%): "EVATATE D-3022", trade name, product of Sumitomo Chemical Co., Ltd.; density: 0.92 g/cm$^3$, MFR: 7.0 g/10 min, melting point: 102°C.

Using 4 extruders, the individual materials were put together in a circular die through 5 flow channels in such a manner that an EVOH layer in the 5-layer laminated film composed of EVOH layer/adhesive layer/EVA (2) layer/adhesive layer/EVA (1) layer became an outermost layer, thereby extruding them into a molten annular body by a co-extrusion method. Air was blown into the molten annular body by a direct inflation method to form a tubular film at a blow-up ratio of 3 and a draft ratio of 3. Thereafter, the tubular film was flattened by pinch rolls, both edges of the flattened tubular film were slit, and the resulting flat films 700 mm wide were wound on intermediate rolls. The film thus obtained had a thickness of 15 μm/5 μm/25 μm/5 μm/40 μm (90 μm in total) in order from the outermost EVOH layer.

The film wound on the intermediate roll was led into an exposing chamber and exposed to electron rays at an exposure dose of 10 Mrad (100 KGy) and an accelerating voltage of 200 KV from the side of the EVOH layer, and at the same time, stretched in a uniaxial direction (winding direction; machine direction, MD) at a draw ratio by area of 10% by means of plural rolls while keeping the temperature of the film at 60-70°C. The thus-treated film was wound on a roll for product to obtain a product (500-meter rolled film).

In order to evaluate the product characteristics of the multi-layer film thus obtained, the unevenness of thickness (U value), dimensional stability (Rw value) and rolled form (R value) thereof were determined. Besides, in order to evaluate the physical properties of the film, the elastic recovery factor, stress at 40% elongation, heat resistance, heat shrinkage factor, unmelted matter, haze and color difference (ΔE) thereof were measured and evaluated. The results are shown in Table 1.

[Example 2]

A film formed and wound on an intermediate roll in the same manner as in Example 1 was exposed to electron rays at an exposure dose of 15 Mrad (150 KGy) and an accelerating voltage of 200 KV from the side of the EVOH layer, and at the same time, stretched in a uniaxial direction (winding direction) at a draw ratio by area of 10% by means of plural rolls while keeping the temperature of the film at 60-70°C. The thus-treated film was wound on a roll for product. The resultant film was evaluated in the same manner as in Example 1. The results are shown in Table 1.

[Example 3]

A film formed and wound on an intermediate roll in the same manner as in Example 1 was exposed to electron rays at an exposure dose of 15 Mrad (150 KGy) and an accelerating voltage of 200 KV from the side of the EVOH layer, and at the same time, stretched in a uniaxial direction (winding direction) at a draw ratio by area of 30% by means of plural rolls while keeping the temperature of the film at 60-70°C. The thus-treated film was wound on a roll for product. The resultant film was evaluated in the same manner as in Example 1. The results are shown in Table 1.

[Comparative Example 1]

A film (a film which was neither exposed to electron rays nor stretched) formed and wound on an intermediate roll in the same manner as in Example 1 was taken as a comparative example. This film was evaluated in the same manner as in Example 1. The results are shown in Table 1.

[Comparative Example 2]

A film formed and wound on an intermediate roll in the same manner as in Example 1 was exposed to electron rays under the same conditions as in Example 1 while keeping the temperature of the film at 60-70°C without stretching it. The thus-treated film was wound on a roll for product. The resultant film was evaluated in the same manner as in Example 1. The results are shown in Table 1.

[Comparative Example 3]

A film formed and wound on an intermediate roll in the same manner as in Example 1 was exposed to electron rays under the same conditions as in Example 2 while keeping the temperature of the film at 60-70°C without stretching it. The thus-treated film was wound on a roll for product. The resultant film was evaluated in the same manner as in Example 1. The results are shown in Table 1.

[Comparative Example 4]

A film formed and wound on an intermediate roll in the same manner as in Example 1 was stretched under the same conditions as in Example 1 while keeping the temperature of the film at 60-70°C without exposing it to electron rays. The thus-treated film was wound on a roll for product. The resultant film was evaluated in the same manner as in Example 1. The results are shown in Table 1.

[Comparative Example 5]

A film formed and wound on an intermediate roll in the same manner as in Example 1 was stretched under the same conditions as in Example 3 while keeping the temperature of the film at 60-70°C without exposing it to electron rays. The thus-treated film was wound on a roll for product. The resultant film was evaluated in the same manner as in Example 1. The results are shown in Table 1.

[Comparative Example 6]

A film formed and wound on an intermediate roll in the same manner as in Example 1 was first exposed to electron rays under the same conditions as in Comparative Example 2. After completion of the exposure, the film was heated to 60-70°C and then stretched in a uniaxial direction (winding direction) at a draw ratio by area of 10% by means of plural rolls. The thus-treated film was wound on a roll for product. The resultant film was evaluated in the same manner as in Example 1. The results are shown in Table 1.

[Comparative Example 7]

A film formed and wound on an intermediate roll in the same manner as in Example 1 was first heated to 60-70°C and stretched in a uniaxial direction (winding direction) at a draw ratio by area of 10% by means of plural rolls in contrast with Comparative Example 6. After completion of the stretching, the film was exposed to electron rays under the same conditions as in Comparative Example 2. The thus-treated film was wound on a roll for product. The resultant film was evaluated in the same manner as in Example 1. The results are shown in Table 1.

[Comparative Example 8]

A film formed and wound on an intermediate roll in the same manner as in Example 1 was exposed to electron rays at an exposure dose of 15 Mrad (150 KGy) and an accelerating voltage of 200 KV from the side of the EVOH layer, and at the same time, stretched in a uniaxial direction (winding direction) at a draw ratio by area of 50% by means of plural rolls while keeping the temperature of the film at 60-70°C. The thus-treated film was wound on a roll for product. The resultant film was evaluated in the same manner as in Example 1. The results are shown in Table 1.

[Comparative Example 9]

A film formed and wound on an intermediate roll in the same manner as in Example 1 was exposed to electron rays at an exposure dose of 20 Mrad (200 KGy) and an accelerating voltage of 200 KV from the side of the EVOH layer, and at the same time, stretched in a uniaxial direction (winding direction) at a draw ratio by area of 10% by means of plural rolls while keeping the temperature of the film at 60-70°C. The thus-treated film was wound on a roll for product. The resultant film was evaluated in the same manner as in Example 1. The results are shown in Table 1.

[Comparative Example 10]

A commercially-available film for skin packaging ("PAIRFLEX", trade name, product of Kureha Chemical Industry Co., Ltd.; non-rigid PVC/PVDC/polyolefin, thickness: 90 μm in total) was taken as a comparative example. This film was evaluated in the same manner as in Example 1. The results are shown in Table 1.

Table 1

| | | Example | | | Comparative Example | | | | | | | | | |
|---|---|---|---|---|---|---|---|---|---|---|---|---|---|---|
| | | 1 | 2 | 3 | 1 | 2 | 3 | 4 | 5 | 6 | 7 | 8 | 9 | 10 |
| Treatment | Exposure [KGy] | 100 | 150 | 150 | – | 100 | 150 | – | – | 100 → | 100 ← | 150 | 200 | Conventional product |
| | Stretching [%] | 10 | 10 | 30 | – | – | – | 10 | 30 | 10 | 10 | 50 | 10 | |
| Product characteristics | Unevenness of thickness [U value] | 0.98 | 0.97 | 0.97 | 0.98 | 0.98 | 0.97 | 0.97 | 0.96 | 0.90 | 0.88 | 0.92 | 0.95 | 0.98 |
| | Dimensional stability [Rw value] | ±1.2 | ±1.3 | ±1.5 | ±1.0 | ±1.2 | ±1.3 | ±1.8 | ±2.0 | ±2.5 | ±2.6 | ±2.8 | ±1.8 | ±1.5 |
| | Rolled form [R value] | 2.1 | 2.6 | 2.8 | 2.1 | 2.3 | 2.3 | 2.1 | 2.8 | 3.4 | 3.6 | 3.0 | 3.1 | 2.5 |
| Physical properties of film | Elastic recovery factor [%] | 75 | 80 | 80 | 65 | 75 | 78 | 65 | 65 | 75 | 78 | 80 | 82 | 90 |
| | Stress at 40% elongation [MPa] | 0.83 | 0.90 | 0.92 | 0.71 | 0.72 | 0.73 | 0.75 | 0.78 | 0.85 | 0.84 | 1.12 | 0.98 | 0.10 |
| | Heat resistance [°C] | 192 | 192 | 194 | 149 | 192 | 192 | 150 | 150 | 192 | 192 | 194 | 194 | 130 |
| | Heat shrinkage factor [%] | 2 | 4 | 18 | 0 | 0 | 0 | 7 | 18 | 7 | 7 | 20 | 3 | 3 |
| | Unmelted matter | A | A | A | A | A | A | A | A | A | A | A | B | A |
| | Haze [%] | 7.1 | 7.2 | 7.4 | 6.2 | 6.8 | 6.9 | 6.2 | 6.4 | 6.9 | 7.1 | 7.8 | 8.2 | 6.3 |
| | Color difference [ΔE] | 23.8 | 23.6 | 23.1 | 22.6 | 23.7 | 23.8 | 22.8 | 22.8 | 23.6 | 23.8 | 23.6 | 23.8 | 23.1 |

EP 0 764 519 A1

(Note):

(1) The laminating structures of the multi-layer films of Examples 1-3 and Comparative Examples 1-9 are each composed of EVOH/EVA (2)/EVA (1) (the adhesive layers are omitted).

(2) The laminating structure of the conventional product of Comparative Example 10 is composed of non-rigid PVC/PVDC/polyolefin.

(3) Comparative Example 6 indicates that the stretching was conducted after the exposure to electron rays.

(4) Comparative Example 7 indicates that the exposure to electron rays was conducted after the stretching.

Suitability test for skin packaging:

The multi-layer films obtained in Examples 1-2 and Comparative Examples 1-7, and the multi-layer film of Comparative Example 10 which was a conventional product were used to conduct the suitability test for skin packaging. The results are shown in Table 2.

Table 2

|  | Surface wrinkle | Melt hole | Warpage of base | Range of forming temperature (°C) |
|---|---|---|---|---|
| Example 1 | A | A | A | 120 - 150 |
| Example 2 | A | A | A | 120 - 150 |
| Comparative Example 1 | C | C | A | - 120 |
| Comparative Example 2 | C | A | A | 120 - 150 |
| Comparative Example 3 | C | A | A | 120 - 150 |
| Comparative Example 4 | C | C | B | - 120 |
| Comparative Example 5 | B | C | B - C | - 120 |
| Comparative Example 6 | A | A | A | 120 - 150 |
| Comparative Example 7 | A | A | A | 120 - 150 |
| Comparative Example 10 | A | B - A | A | - 120 |

As shown in Table 2, the multi-layer films according to Examples 1 and 2, which were obtained by conducting a treatment combining the exposure to electron rays with the stretching, had the same appearance (the degree of wrinkles) as that of the conventional product of Comparative Example 10 (non-rigid PVC/PVDC/polyolefin). Further, with respect to their forming, they were able to be formed without causing melt holes in a temperature range higher than the conventional skin packaging by 30°C.

In Comparative Examples 6 and 7, the exposure to electron rays and stretching were performed successively. As shown in Table 2, no marked difference arose between the case where the exposure to electron rays and stretching were performed concurrently (Examples 1 and 2) and the case where the exposure to electron rays and stretching were performed successively (Comparative Examples 6 and 7). As shown in Table 1, however, the films obtained by the successive treatment are poorer than the films obtained by the concurrent treatment in the unevenness of thickness, dimensional stability and rolled form. Therefore, the films obtained by the concurrent treatment are more desirable than the films obtained by the successive treatment from the viewpoint of the product characteristics. Further, in the case of the concurrent treatment, the film is heated by thermal energy generated upon the exposure. In the case of, for example, Example 1, the temperature of the film upon the exposure reaches 60-70°C. Accordingly, the concurrent treatment does not require to reheat the film, which is necessary for the successive treatment, and is hence excellent even from the viewpoint of production cost.

## Claims

1. A multi-layer film composed of a laminate comprising at least (i) a layer formed of an ethylene-vinyl alcohol copolymer (EVOH) and (ii) a layer formed of an ethylene-vinyl acetate copolymer (EVA) having a vinyl acetate content of 2-7 mass%, wherein the layer formed of the ethylene-vinyl acetate copolymer is crosslinked by radiation exposure and stretched at a draw ratio by area ranging from 5 to 40% at the same time as the radiation exposure.

2. The multi-layer film according to Claim 1, wherein the laminate comprises (i) the layer formed of the ethylene-vinyl alcohol copolymer (EVOH) as a surface layer, (ii) the layer formed of the ethylene-vinyl acetate copolymer (EVA) having a vinyl acetate content of 2-7 mass% as a core layer and (iii) a layer formed of at least one polyethylene resin (PE resin) selected from the group consisting of ethylene homopolymers and ethylene copolymers (provided that if the ethylene copolymer is an ethylene-vinyl acetate copolymer, the vinyl acetate content therein is at most 5 mass%) as an inner layer, and optionally adhesive layers provided between the individual layers.

3. The multi-layer film according to Claim 1 or 2, wherein the ethylene-vinyl alcohol copolymer (EVOH) has an ethylene content within a range of 27-47 mol% and a melting point within a range of 160-191°C.

4. The multi-layer film according to Claim 1 or 2, which has an elastic recovery factor at 40% elongation of at least 70% and a stress at such elongation of at most 1.0 MPa.

5. The multi-layer film according to Claim 1 or 2, wherein the layer formed of the ethylene-vinyl acetate copolymer (EVA) having a vinyl acetate content of 2-7 mass% is crosslinked by exposure to electron rays at an exposure dose of 5-18 Mrad (50-180 KGy).

6. The multi-layer film according to Claim 2, wherein the PE resin forming the inner layer is at least one selected from the group consisting of low-density polyethylene (LDPE), medium-density polyethylene (MDPE), high-density polyethylene (HDPE), linear low-density polyethylene (LLDPE), very low-density polyethylene (VLDPE), ethylene-vinyl acetate copolymers (EVAs) having a vinyl acetate content of at most 5 mass%, ethylene-acrylic acid copolymers (EAAs), ethylene-methacrylic acid copolymers (EMAAs), ethylene-methyl acrylate copolymers (EMAs), ethylene-ethyl acrylate copolymers (EEAs), and ionomers (IOs).

7. The multi-layer film according to Claim 2, which has a laminating structure composed of surface layer (EVOH)/adhesive layer/core layer (EVA)/adhesive layer/inner layer (PE resin).

8. The multi-layer film according to Claim 7, wherein the PE resin of the inner layer is an EVA having a vinyl acetate content of at most 5 mass%.

9. The multi-layer film according to Claim 8, wherein the EVA of the inner layer has a vinyl acetate content not higher than that in the EVA of the core layer.

10. The multi-layer film according to Claim 8, wherein the EVA of the inner layer has a vinyl acetate content lower than that in the EVA of the core layer.

11. The multi-layer film according to Claim 2, wherein (i) the EVOH layer of the surface layer has a thickness of 5-90

μm, (ii) the EVA layer of the core layer has a thickness of 10-70 μm, and (iii) the PE resin layer of the inner layer has a thickness of 20-140 μm, the total thickness of said layers being 35-300 μm.

12. The multi-layer film according to Claim 1 or 2, which is obtained by extruding the materials forming the individual layers into a molten annular body by a co-extrusion method, forming a laminated film by an inflation method in which air is blown into this annular body, and then exposing the laminated film to radiation and stretching it at a draw ratio by area ranging from 5 to 40% at the same time as the radiation exposure.

13. The multi-layer film according to Claim 12, wherein the radiation exposure is conducted from the side of the EVOH layer of the laminated film.

14. The multi-layer film according to Claim 1 or 2, which is a skin-packaging film.

15. The skin-packaging film according to Claim 14, which is suitable for use in a vacuum packaging process under heat, in which a skin-packaging film is subjected to draw forming by means of a vacuum mold equipped with a heater, a product to be packed on a base film is covered with a recess of the skin-packaging film defined by the draw forming, and air in a space between both films is then evacuated to bring the skin-packaging film into close contact with the product to be packed making good use of the elastic recoverability of the skin-packaging film.

**European Patent Office**

**EUROPEAN SEARCH REPORT**

Application Number

EP 96 11 4079

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US-A-5 037 683 (SCHIRMER H G) 6 August 1991 <br> * claims 1,2,4,5,8,9; examples 1,2 * <br> --- | 1,5,6 | B32B27/30 <br> B32B31/00 |
| X | EP-A-0 217 596 (GRACE W R CO) 8 April 1987 <br> * page 8, line 1 - line 11; claims 1,4,5,7 * <br> * page 9, line 4 - line 16 * <br> --- | 1,3,5,6 | |
| X | EP-A-0 402 841 (VISKASE CORP) 19 December 1990 <br> * page 5, line 52 - page 6, line 2; claims 1-4,7,10-14,26 * <br> * page 6, line 23 - line 29 * <br> ----- | 1 | |

TECHNICAL FIELDS SEARCHED (Int.Cl.6)

B32B

The present search report has been drawn up for all claims

| Place of search | Date of completion of the search | Examiner |
|---|---|---|
| THE HAGUE | 28 October 1996 | Kanetakis, I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document